# EUROPÄISCHE PATENTSCHRIFT

(11) **EP 1 050 170 B1**
(45) Veröffentlichungstag und Bekanntmachung des Hinweises auf die Patenterteilung: **26.10.2005**
(21) Anmeldenummer: 98966813.2
(22) Anmeldetag: 28.12.1998
(51) Int. Cl.: H04Q 3/00, H04L 12/24

(54) **VERFAHREN UND KOMMUNIKATIONSSYSTEM ZUR BEHANDLUNG VON ALARMEN DURCH EIN MEHRERE MANAGEMENTEBENEN AUFWEISENDES MANAGEMENTNETZ**
METHOD AND COMMUNICATION SYSTEM FOR PROCESSING ALARMS USING A MANAGEMENT NETWORK INVOLVING SEVERAL LAYERS OF MANAGEMENT
PROCEDE ET SYSTEME DE COMMUNICATION POUR LE TRAITEMENT D'ALARMES PAR UN RESEAU DE GESTION COMPORTANT PLUSIEURS NIVEAUX DE GESTION

(30) Priorität: 19.01.1998 DE 19801784
(43) Veröffentlichungstag der Anmeldung: 08.11.2000
(73) Patentinhaber: SIEMENS AKTIENGESELLSCHAFT, 80333 München (DE)
(72) Erfinder: HIRSCH, Lucian, D-81373 München (DE); SCHMIDBAUER, Alfred, D-81671 München (DE)
(86) Internationale Anmeldenummer: PCT/DE1998/003807
(87) Internationale Veröffentlichungsnummer: WO 1999/037101

(56) Entgegenhaltungen:
- WO-A-96/20547
- WO-A-96/24899
- WO-A-97/24835
- WO-A-97/24837
- US-A- 5 204 955

## Beschreibung

Die Erfindung betrifft ein Verfahren sowie ein entsprechendes Kommunikationssystem zur Behandlung von Alarmen durch ein mehrere Managementebenen aufweisendes Managementnetz, wobei für einen Alarmdatenabgleich zwischen einem Agent einer Managementebene und zumindest einem Manager einer nächsthöheren Managementebene die Alarmdaten aktiver Alarme übertragen werden.

Die Prinzipien eines Managementnetzes, die auch als TMN-Prinzipien (Telecommunications Management Network) bezeichnet werden, definieren mehrere Managementebenen für das Management eines Kommunikationssystems - beispielsweise eines Mobil-Kommunikationssystems - , wobei jede Ebene eine doppelte Funktion hat. Im managenden System hat jede Ebene außer der untersten eine Manager-Funktion für die darunterliegende Ebene. Im gemanagten System hat jede Ebene außer der obersten eine Agenten-Funktion für die nächsthöhere Ebene.

Das Fehlermanagement ("Fault Management") ist ein wichtiger Teil des TMN-Managements. Grundsätzlich spielt hier der Agent die aktive Rolle, indem er Fehler der eigenen Managementebene rechtzeitig und genau erkennt und an den Manager der nächsthöheren Ebene als Alarme überträgt. Die Übertragung von Alarmdaten vom Agent zum Manager ist unkritisch, solange der Kommunikationsmechanismus zwischen diesen Systemen nicht gestört ist. Wenn die Verbindung zwischen den beiden Managementebenen, also zwischen Agent und Manager, für eine bestimmte Zeit nicht mehr gewährleistet ist, muß der Agent die während dieses Intervalls aufgetretenen Alarme zwischenspeichern, um sicherzustellen, daß nach dem Wiederherstellen der Kommunikationsmöglichkeit dem Manager zum einen möglichst schnell eine Übersicht der z.Zt. aktiven Alarme - z.B. in Form einer Liste - zur Verfügung gestellt wird, und der Manager zum anderen eine möglichst lückenlose Alarmgeschichte ("alarm history") sowohl der aktiven als auch der beendeten Alarme ("cleared alarms") aufbauen kann.

Zu diesem Zweck wird ein Alarmdatenabgleich (alarm realignment) zwischen Agent und Manager bei jedem neuen Verbindungsaufbau nach einem Verbindungsabbruch oder nach einer Initialisierung des Agenten oder des Managers ausgeführt. Alle Alarmdaten aktiver Alarme, zu denen Fehler im Agent noch nicht behoben sind - erkennbar daran, daß sie nicht als "cleared alarms" gekennzeichnet sind -, sind daher schnellstmöglich und vollständig der nächsthöheren Managementebene zur Verfügung zu stellen.

In der älteren Patentanmeldung P 19752614.4 sind ein derartiges Verfahren und Kommunikationssystem zur Behandlung von Alarmen angegeben, die eine Basisfunktionalität für den Manager zur Anforderung aller Alarme vom Agent beschrieben. Dabei sendet der Agent die aktiven Alarme als Sequenz standardisierter M-EVENT-REPORTS, die in eine vom Manager zu Anfang initiierte M-ACTION-Request Anforderung und in eine vom Agent zum Ende initiierte M-ACTION-Response Antwort eingebettet ist. Dieses sind generische CMISE-standardisierte (Common Management Information Service Element) Prozeduren, die gemäß ITU-T X.710 definiert sind. Die ITU-T X.733 definiert den Inhalt einer standardisierten Alarmübertragung (alarm report), die gemäß den M-EVENT-REPORT Services durchgeführt wird. Alle in Rahmen dieser M-ACTION definierten M-EVENT-REPORTS sind zu der jeweiligen Anforderung durch Verwendung von Korrelationsinformationen eindeutig korreliert. Dies erlaubt dem Manager, diese M-EVENT-REPORTS einer bestimmten Anforderung zuzuordnen und darüber hinaus von anderen, "regulären" M-EVENT-REPORTS zu unterscheiden.

Aus der internationalen Patentanmeldung WO 96/24899 ist ein Verfahren mit einem oder mehreren Managern sowie einem Agent bekannt, bei dem die Anzahl der Nachrichten im Agent reduziert werden soll. Zur Reduzierung der Verarbeitungslast im Agent sieht das Verfahren vor, bereits die Erzeugung der Nachrichten im "managed system" vom Operator am "managing system" kontrollieren zu lassen, d.h. der Agent soll wirklich nur solche Nachrichten generieren, die für den Manager relevant und daher anschließend als "Event reports" über die Manager-Agent-Schnittstelle zu übertragen sind. Das Erzeugen der Nachrichten im Agent erfolgt abhängig von einem "notification stop"- Attribut bei der Definition der einzelnen Objektinstanz, sodass das Aussenden der Nachrichten lastabhängig erlaubt oder verhindert wird.

Aus der internationalen Patentanmeldung WO 96/20547 ist ein Verfahren zur Behandlung von Alarmen in einem Kommunikationssystem bekannt, bei dem zwei Ringpuffer von entkoppelten Agent-Prozessoren verwendet werden, mit denen eine "snaps-hot"-Kopie des Systemzustands im Agent zu einem Zeitpunkt, wenn die Kommunikation zwischen Manager und Agent nicht mehr läuft, erzeugt wird.

Aufgabe der Erfindung ist es, ein derartiges Verfahren und Kommunikationssystem zur Behandlung von Alarmen durch ein mehrere Managementebenen aufweisendes Managementnetz anzugeben, durch das ein Alarmdatenabgleich zwischen einem Agent und zumindest einem Manager weiter verbessert wird.

Diese Aufgabe wird gemäß der Erfindung hinsichtlich des Verfahrens durch die Merkmale des Patentanspruchs 1 und hinsichtlich des Kommunikationssystems durch die Merkmale des Patentanspruchs 12 gelöst. Weiterbildungen der Erfindung sind den Unteransprüchen zu entnehmen.

Die Erfindung geht davon aus, daß für einen Alarmdatenabgleich zwischen einem Agent einer Managementebene und zumindest einem Manager einer nächsthöheren Managementebene die Alarmdaten aktiver Alarme übertragen werden. Darüber hinaus werden von dem Manager eine oder mehrere Anforderungsnachrichten zum Übermitteln der Alarmdaten an den Agent gesendet, sowie Korrelationsinformationen für eine Zuordnung der jeweiligen Anforderung zu den vom Agent nachfolgend gesendeten Nachrichten mit den Alarmdaten empfangen. Erfindungsgemäß wird von dem Manager der Alarmdatenabgleich abhängig von zumindest einem zum Agent gesendeten Parameter gesteuert.

Durch den Erfindungsgegenstand ist der Alarmdatenabgleich für den Manager gegenüber der Basisfunktionalität parametrisierbar, d.h. nicht mehr alle aktiven Alarme müssen zwangsläufig vom Agent gesendet werden, sondern nur die durch den übermittelten Parameter näher definierten. Damit ergibt sich für den Manager eine Auswahlfunktion für eine Teilmenge aus allen Alarmen. Insbesondere die Möglichkeit der steuernden Beeinflussung des Abgleichs mit einfachen Mitteln und unter Anwendung standardisierter Nachrichten erhöht die Flexibilität des Managers und reduziert den Nachrichten- und Informationsfluß erheblich. Erst durch die parametrisierbare Alignment-Funktionalität gemäß der Erfindung können beispielsweise eine Priorisierung der Alarme und/oder eine aktive Steuerung der Reihenfolge der angeforderten Alarme erzielt werden. Besonders die Kombination der Basisfunktionalität - Verwendung der Korrelationsinformationen - mit der parametrisierbaren Alignment-Funktionalität führt zu einem besonders effektiven Verfahren und Kommunikationssystem, das eine optimale Nutzung der Übertragungsressourcen auf der Schnittstelle der Agent-Manager-Beziehung sowie ein schnellstmögliches Bereitstellen nur der vom Manager gewünschten Alarmdaten aktiver Alarme für die nächsthöhere Managementebene durch den Agent bewirkt.

Gemäß einer Weiterbildung der Erfindung werden von dem Manager der oder die Parameter in jeder Anforderungsnachricht zu dem Agent gesendet. Dadurch erfolgt die vom Manager gewünschte Parametrisierung des Alarmdatenabgleichs für jede einzelne Anforderung individuell.

Gemäß einer alternativen Weiterbildung der Erfindung werden von dem Manager der oder die Parameter in einer den Anforderungsnachrichten vorangestellten Setznachricht zu dem Agent gesendet. Dadurch erfolgt die vom Manager gewünschte Parametrisierung des Alarmdatenabgleichs vor der ersten Anforderungsnachricht gemeinsam für mehrere Anforderungen, für die die in der Setznachricht enthaltene einmalige Einstellung des Managers Gültigkeit hat.

Gemäß weiterer vorteilhafter Weiterbildungen der Erfindung kann die Parametrisierung mit einem oder mehreren der folgenden, von dem Manager jeweils eingestellten Parameterwerten erfolgen. Durch den Parameterwert werden vom Agent Alarme angefordert,
- die von ausgewählten Agenteinheiten stammen,
- für die eine Dringlichkeit angenommen wird,
- anhand dessen der Agent eine Priorisierung beim Senden der angeforderten Alarme nach deren Dringlichkeit, vorzugsweise anhand unterschiedlicher Dringlichkeitswerte, vornimmt,
- die innerhalb eines durch einen Anfangszeitpunkt und einen Endzeitpunkt definierten Zeitintervalls entstehen,
- anhand dessen der Agent beim Senden eine Priorisierung der Alarme nach dem Entstehungszeitpunkt der Alarme vornimmt.

Eine Ausgestaltung des Erfindungsgegenstandes sieht vor, daß von dem Agent die Alarmdaten der Alarme mit den ältesten Entstehungszeitpunkten zuerst und die Alarmdaten der Alarme mit den jüngsten Entstehungszeitpunkten zuletzt bereitgestellt und gesendet werden.

So sieht eine besonders günstige Ausgestaltung des Erfindungsgegenstandes vor, daß von dem Agent die Alarmdaten der Alarme mit kritischer Dringlichkeit, bei der die Funktionalität als nicht mehr gegeben angenommen wird, zuerst und die Alarmdaten der Alarme mit unkritischer Dringlichkeit, bei der die Funktionalität als nicht mehr gegeben angenommen wird, zuletzt bereitgestellt und gesendet werden.

Mit der obigen Vorgehensweise kann der Manager die im Hinblick auf die Funktionalität besonders kritischen und damit für ihn wichtigen Alarme gezielt abrufen, und dabei die Schnittstelle zum Agent durch den nur auf bestimmte Alarme eingeschränkten Informationsfluß gegenüber dem herkömmlichen Verfahren der automatischen Meldung aller Alarme wesentlich entlasten.

Nachstehend wird die Erfindung anhand von Ausführungsbeispielen unter Bezugnahme auf die Figuren näher erläutert. Es zeigen
- FIG 1: das Blockschaltbild eines Managementnetzes für ein Mobil-Kommunikationssystem mit Agent-Manager-Beziehung zwischen einem Betriebs- und Wartungszentrum und einem oder mehreren Netzmanagementzentren,
- FIG 2: das Blockschaltbild des Managementnetzes gemäß Figur 1 mit Agent-Manager-Beziehung zwischen einem Basisstationssystem und einem Betriebs- und Wartungszentrum zur Durchführung von zumindest zwei Anwendungen für das Basisstationssystem,
- FIG 3: das Blockschaltbild von Agent und Manager zur Behandlung der Alarme für parallel oder seriell ablaufende Alarmdatenabgleiche,
- FIG 4: den Nachrichtenfluß zwischen dem Manager und dem Agent zur individuellen parameterabhängigen Steuerung des Alarmdatenabgleichs in jeder Anforderungsnachricht,
- FIG 5: den Nachrichtenfluß nach FIG 4 am Beispiel der Verwendung von zwei verschiedenen Parameterwerten.
- FIG 6: den Nachrichtenfluß zwischen dem Manager und dem Agent zur parameterabhängigen Steuerung des Alarmdatenabgleichs durch eine einmalige Einstellung für mehrere Anforderungsnachrichten.
- FIG 7: den Nachrichtenfluß nach FIG 6 am Beispiel der Verwendung von zwei verschiedenen Parameterwerten, und
- FIG 8: den Nachrichtenfluß zwischen dem Manager und dem Agent zur Abfrage der für den Alarmdatenabgleich benutzten Parameterwerte nach FIG 7.

Das Ausführungsbeispiel beschreibt die Erfindung anhand eines TMN-Konzepts für das Management eines Mobil-Kommunikationssystems, das beispielsweise Netzeinrichtungen eines Mobilfunknetzes nach dem GSM-Standard aufweist. Die Erfindung ist aber nicht auf Mobilfunknetze beschränkt, sondern läßt sich auf Telekommunikationsnetze jeder Art, die ein TMN-Managementnetz nutzen, anwenden.

Ein Mobil-Kommunikationssystem ist ein hierarchisch gegliedertes System verschiedener Netzeinrichtungen, bei dem die unterste Hierarchiestufe von den Mobilstationen gebildet wird. Diese Mobilstationen kommunizieren über eine Funkschnittstelle mit die nächste Hierarchieebene bildenden Funkstationen, die als Basisstationen bezeichnet werden. Die beispielsweise Mobilstationen in einem Funkbereich einer Funkzelle versorgenden Basisstationen sind vorzugsweise zur Abdeckung eines größeren Funkgebiets zusammengefaßt und mit übergeordneten Netzeinrichtungen, den Basisstationssteuerungen verbunden. Die Basisstationen und Basisstationssteuerungen gehören zu einem Basisstationssystem (Base Station Subsystem) des Mobil-Kommunikationssystems. Die Basisstationssteuerungen kommunizieren über definierte Schnittstellen mit einer oder mehreren Vermittlungseinrichtungen, den Mobilvermittlungsstellen, über die u.a. auch der Übergang zu anderen Kommunikationsnetzen erfolgt. Die Mobilvermittlungsstellen bilden gemeinsam mit einer Mehrzahl von Datenbanken das Vermittlungssystem (Switching Subsystem) des Mobil-Kommunikationssystems.

Neben den obigen Netzeinrichtungen existieren ein oder mehrere Betriebs- und Wartungszentren (Operation and Maintenance Centers), die u.a. zum Konfigurieren und Überwachen der Netzeinrichtungen dient. Überwachungsmaßnahmen und Konfigurierungsmaßnahmen werden hierzu meist vom Betriebs- und Wartungszentrum aus ferngesteuert, die üblicherweise im Bereich der Mobilvertnittlungsstellen angeordnet sind. Ein Betriebs- und Wartungszentrum kommuniziert dabei jeweils mit einem Basisstationssystem oder vermittlungssysstem über eine definierte Schnittstelle. Eine weitere Aufgabe des Betriebs- und Wartungssystems ist die Durchführung des Konfigurationsmanagements (Configuration Management), das neben dem Fehlermanagement einen von fünf Managementfunktionsbereichen darstellt, die die TMN-Prinzipien identifizieren. Das Konfigurationsmanagement definiert eine Reihe von Diensten, die eine Änderung der Struktur und damit des Verhaltens eines Telekommunikationsnetzes durch den Bediener ermöglichen. Diese Dienste beziehen sich immer auf Instanzen von gemanagten Objekten, die insgesamt die netzspezifische Managementinformationsbasis bilden.

Ein gemanagtes Objekt im Sinne des Konfigurationsmanagements ist eine logische Abstraktion einer Ressource im Mobil-Kommunikationssystem. Hierbei wird unterschieden zwischen hardwarebezogenen gemanagten Objekten, die eine herstellerspezifische Realisierung einer Funktion beschreiben, und funktionsbezogenen gemanagten Objekten, bei denen es sich jeweils um die Abstraktion einer herstellerunabhängigen Funktionalität handelt.

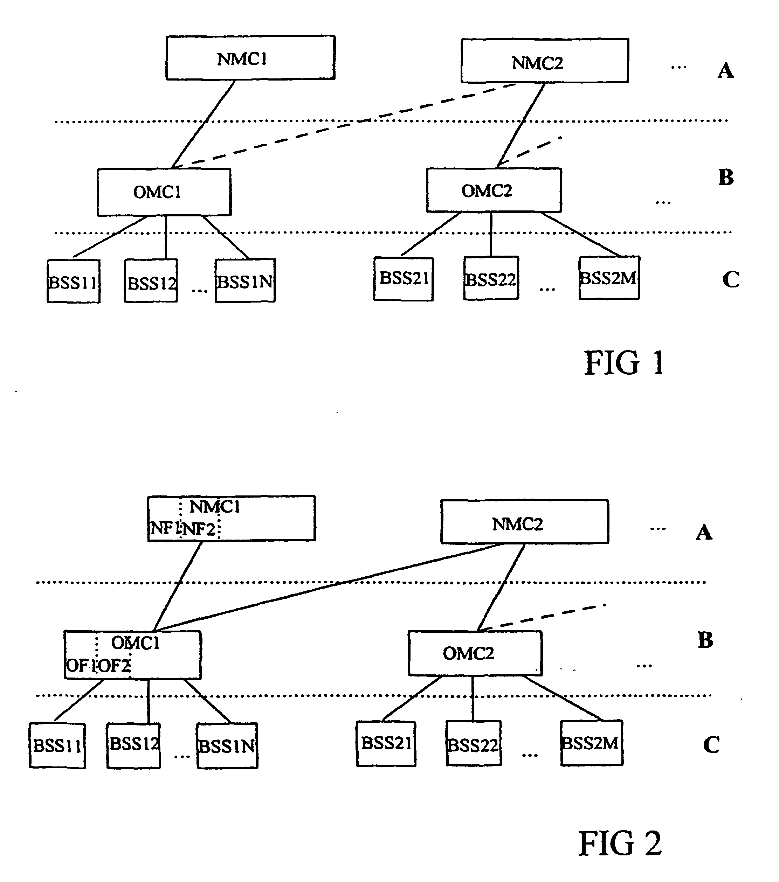

Für das Management des Mobil-Kommunikationssystems definieren die TMN-Prinzipien mehrere Ebenen ("Levels"), von denen im vorliegenden Beispiel drei Ebenen unter Bezugnahme auf die Figuren 1 und 2 nachfolgend erläutert werden.

Die Figuren 1 und 2 zeigen jeweils drei Ebenen A, B und C des Managementnetzes, von denen die Managementebene C die Netzeinrichtungsebene ("Network Element Level") mit mehreren Basisstationssystemen BSS11, BSS12...BSS1N sowie BSS21, BSS22 ...BSS2M enthält. Die Managementebene B kennzeichnet die Netzeinrichtungsmanagementebene ("Network Element Management Level"), in der Betriebs- und Wartungszentren OMC1 und OMC2 jeweils die herstellerspezifische Managementfunktionalität für einzelne Subsysteme, wie im vorliegenden Beispiel das Betriebs- und Wartungszentrum OMC1 für die Basisstationssysteme BSS11, BSS12 ...BSS1N und das Betriebs- und Wartungszentrum OMC2 für die Basisstationssysteme BSS21, BSS22...BSS2M, bereitstellen. Die Managementebene A kennzeichnet die Netzmanagementebene ("Network Management Level"), in der Netzmanagementzentren NMC1 und NMC2 jeweils eine integrierte, vom Hersteller unabhängige Management-Funktionalität realisieren. Dabei können mehrere Netzmanagementzentren einen Zugriff zu derselben Netzeinrichtung der nächstniedrigeren Managementebene B haben, im vorliegenden Beispiel die Netzmanagementzentren NMC1 und NMC2 der nächsthöheren Managementebene C zum Betriebs- und Wartungszentrum OMC1 der nächstniedrigeren Managementebene B. Zwischen den Netzeinrichtungen unterschiedlicher Managementebenen sind definierte Schnittstellen zur Informationsübertragung vorgesehen.

Der Unterschied in den Darstellungen gemäß den Figuren 1 und 2 liegt darin, daß eine Agent-Manager-Beziehung zur Behandlung von Alarmen für einen oder mehrere Alarmdatenabgleiche in Figur 1 zwischen dem Betriebs- und Wartungszentrum OMC1 (Agent) und einem Netzmanagementzentrum NMC1 (Manager) oder mehreren - physikalisch getrennten - Netzmanagementzentren NMC1, NMC2 (Manager) sowie in Figur 2 zwischen dem Basisstationssystem BSS11 (Agent) und zwei verschiedenen Anwendungen OF1 und OF2 (Manager) in dem Betriebs- und Wartungszentrum OMC1 oder zwischen dem Betriebs- und Wartungszentrum OMC1 (Agent) und zwei verschiedenen Anwendungen NF1 und NF2 (Manager) in dem Netzmanagementzentrum NMC1 besteht. Um in den Netzmanagementzentren NMC1, NMC2 jederzeit einen Überblick über die Fehlersituation sicherzustellen, werden vom Betriebs- und Wartungszentrum OMC1 die - auf Grund von beispielsweise innerhalb der betreuten Basisstationssysteme BSS11...BSS1N auftretenden Fehlern - gespeicherten Alarmdaten aktiver Alarme bereitgestellt und parallel zu beiden Managern auf Anforderung gesendet. Dies erfolgt vorzugsweise nach einem Verbindungsabbruch oder nach einer Initialisierung des Agenten oder des Managers. Ebenso können mehrere Anforderungen auch hintereinander von einem einzelnen Manager, z.B. dem Netzmanagementzentrum NMC1 an den Agent, z.B. dem Betriebs- und Wartungszentrum OMC1, gerichtet werden. Figur 1 zeigt die Struktur für gemäß der Erfindung mehrfach ausgesendete Anforderungen zum Alarmdatenabgleich, die im vorliegenden Beispiel parallel zwischen der Managementebene B, in der sich der Agent in Form des Betriebs- und Wartungszentrums OMC1 befindet, und der nächsthöheren Managementebene A, in der die Manager von zumindest zwei Netzmanagementzentren NMC1, NMC2 gebildet werden, ablaufen.

Um auch in der Managementebene B, z.B. in dem Betriebs- und Wartungszentrum OMC1 jederzeit einen Überblick über die Fehlersituation sicherzustellen, werden vom Basisstationssystem BSS11 die - auf Grund von beispielsweise innerhalb der betreuten Basisstationen und Basisstationssteuerungen auftretenden Fehlern - gespeicherten Alarmdaten aktiver Alarme bereitgestellt und parallel zu mindestens zwei Managern des Betriebs- und Wartungszentrums OMC1 in Form der unterschiedlichen Anwendungen OF1 und OF2, die beide von ein- und derselben physikalischen Einrichtung OMC1 ausgeführt werden, gesendet. Dies erfolgt ebenfalls vorzugsweise nach einem Verbindungsabbruch oder nach einer Initialisierung des Agenten oder des Managers. Eine serielle Übertragung von mehrfach durch einen einzelnen Manager, z.B. dem Betriebs- und Wartungszentrum OMC1, initiierten Anforderungen an den Agent, z.B. dem Basisstationssystem BSS11, ist ebenfalls möglich. Alternativ oder zusätzlich kann eine Agent-Manager Beziehung auch zwischen dem Betriebs- und Wartungszentrum OMC1 (ein Agent) und dem Netzmanagementzentrum NMC1 (ein Manager) zum seriellen Austausch von Anforderungen und Alarmdaten oder zum parallelen Austausch von Anforderungen und Alarmdaten für mindestens zwei unterschiedliche Anwendungen NF1 und NF2 (zwei Manager) im Netzmanagementzentrum NMC1 existieren. Figur 2 zeigt die Struktur für gemäß der Erfindung parallel ablaufende Alarmdatenabgleiche zwischen der Managementebene B, in der sich die Manager als Anwendungen OF1 und OF2 befinden, und der nächstniedrigeren Managementebene C, in der sich der Agent befindet.

Sobald eine in der Managementebene C ausgefallene interne Schnittstelle wieder betriebsbereit ist, wird auf Anforderung des Managers/der Manager der Alarmdatenabgleich, auch als Realignment-Prozedur oder Realignment-Verfahren bezeichnet, gestartet, wobei gemäß der Erfindung vom Manager der Alarmdatenabgleich parameterabhängig gesteuert wird. Dabei beginnt der Alarmdatenabgleich im vorliegenden Beispiel zuerst zwischen dem Basisstationssystem, z.B. BSS11, und den Anwendungen OF1, OF2 im Betriebs- und Wartungszentrum OMC1 parallel und setzt sich anschließend zwischen dem Betriebs- und Wartungszentrum OMC1 und den übergeordneten Netzmanagementzentren NMC1, NMC2 parallel fort. Am Ende dieser Prozeduren ist die Fehlersituation sowohl im OMC als auch in den NMC wieder aktualisiert. Das Realignment-Verfahren kann selbstverständlich auf die Aktualisierung der Alarmdaten zwischen Agent und Managern in zwei unmittelbar angrenzenden Managementebenen, z.B. Ebene B und Ebene A, beschränkt sein.

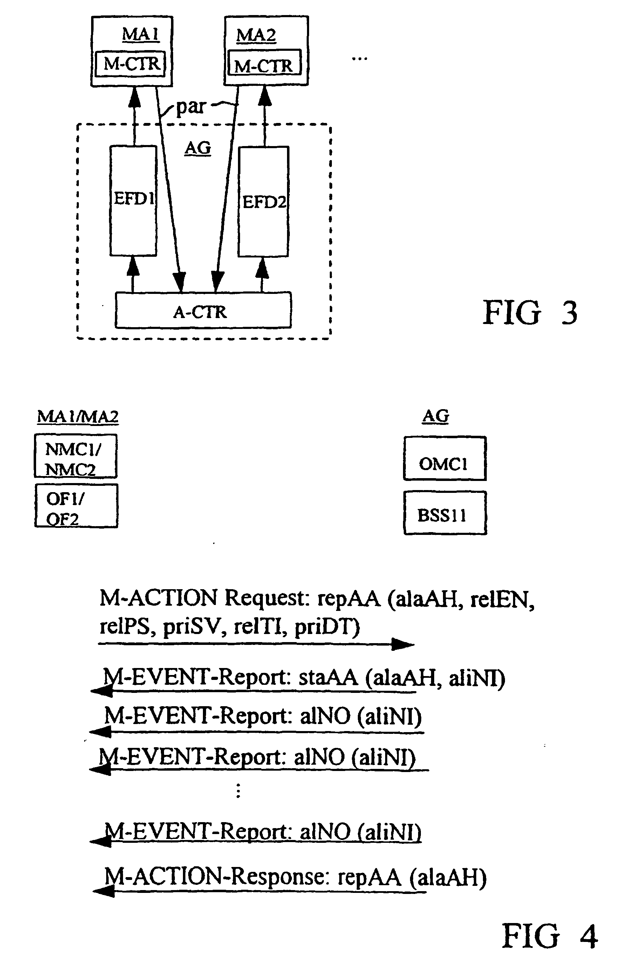

Figur 3 zeigt in schematischer Darstellung den Aufbau von Agent AG und Manager MA1, MA2 mit den zur Durchführung simultan - bei zwei oder mehreren Managern - oder seriell - bei nur einem Manager - ablaufender Realignment-Prozeduren erforderlichen Einrichtungen. Jeder Manager MA1, MA2 und Agent AG verfügt über eine Steuereinrichtung M-CTR bzw. A-CTR, die die Nachrichten für den Alarmdatenabgleich generieren und auswerten können. Ebenso weisen sie - nicht näher dargestellte - Sende/Empfangseinrichtungen für das Versenden und Empfangen der Nachrichten sowie Speichereinrichtungen für das Speichern der Alarmdaten und anderer Nutz- und Signalisierungsinformationen auf.

Dabei fügen die Steuereinrichtungen M-CTR der Manager MA1, MA2 in die jeweilige Anforderungsnachricht zur Übermittlung der Alarmdaten durch den Agent eine zur Zuordnung der Anforderung zu nachfolgend gesendeten Nachrichten benutzte Korrelationsinformation ein, die eindeutig ist, und veranlaßt die Übertragung zum Agent. Darüber hinaus fügen die Einrichtungen M-CTR der Manager MA1, MA2 zur Steuerung des Alarmdatenabgleichs einen oder mehrere Parameter par in jede Anforderungsnachricht individuell oder in eine den Anforderungsnachrichten vorangestellte Setznachricht ein, um bestimmte, durch verschiedene Parameterwerte gekennzeichnete Alarme gezielt anzufordern. Die jeweilige Anforderungsnachricht bzw. die gesonderte Setznachricht wird mit den Parametern par zum Agent AG gesendet. Erst durch die parametrisierbare Alignment-Funktionalität gemäß der Erfindung können beispielsweise eine Priorisierung der Alarme und/oder eine aktive Steuerung der Reihenfolge der angeforderten Alarme erzielt werden.

Die Steuereinrichtung A-CTR des Agent AG empfängt die entsprechende Nachricht mit den Parametern par, wertet sie aus, und startet das Realignment zu den Managern MA1, MA2 durch Rücksenden der von den Managern spezifisch angeforderten Alarme. Dabei wird die von den Managern MA1, MA2 in die Anforderungsnachricht eingetragene eindeutige Korrelationsinformation zur Korrelation der Anforderungen benutzt, und jeweils eine Nachricht mit einer weiteren Korrelationsinformation zur Zuordnung der nachfolgend vom Agent gesendeten Nachrichten (alarm notifications) zu dem jeweils gestarteten Realignment in die nächsthöhere Managementebene gesendet. Auch die weitere Korrelationsinformation ist eindeutig. Durch die Verwendung der Korrelationsinformationen ist eine eindeutige Zuordnung simultan oder seriell durchgeführter Realignments zu mehreren Managern oder einem einzelnen Manager möglich.

Besonders die Kombination der Basisfunktionalität - Verwendung der Korrelationsinformationen - mit der parametrisierbaren Alignment-Funktionalität führt zu einem besonders effektiven Verfahren und Kommunikationssystem, das eine optimale Nutzung der Übertragungsressourcen auf der Schnittstelle der Agent-Manager-Beziehung sowie ein schnellstmögliches Bereitstellen nur der vom Manager gewünschten Alarmdaten aktiver Alarme für die nächsthöhere Managementebene durch den Agent bewirkt. Ressourcenausnutzung, Zeitdauer und Flexibilität werden folglich in dem erfindungsgemäß ausgestalteten Kommunikationssystem gegenüber der Basisfunktionalität weiter optimiert.

Wahlweise können im Agent AG mehrere, jeweils den Managern MA1, MA2 zuordenbare und von ihnen steuerbare Filterfunktionen EFD1, EFD2 (Event Forwarding Discriminators) mit Filterkriterien für die vom Agent AG erzeugten Nachrichten mitbenutzt werden, sodaß die Nachrichten mit den Alarmdaten nur bei Erfüllen der Filterkriterien zu den Managern MA1, MA2 geroutet werden. Die Steuereinrichtung M-CTR des Managers ist in der Lage, derartige Filterfunktionen im Agent AG einzurichten, zu löschen und die Filterkriterien festzulegen, um je nach seinen individuellen Anforderungen den Nachrichtenfluß steuern zu können. Daher kann der Fall auftreten, daß die Filterfunktions-Einstellung von Manager zu Manager unterschiedlich ist, sodaß durch die simultan ablaufenden Realignment-Prozeduren inhaltlich verschiedene Alarme mit zugehörigen Alarmdaten behandelt werden.

Figur 4 zeigt den Nachrichtenfluß zwischen einem Agent AG - im dargestellten Beispiel gemäß der Figur 1 dem Betriebs- und Wartungszentrum OMC1 oder im dargestellten Beispiel der Figur 2 dem Basisstationssystem BSS11 - und dem Manager MA1, MA2 - im Beispiel gemäß der Figur 1 den unterschiedlichen Netzmanagementzentren NMC1, NMC2 oder im Beispiel der Figur 2 den verschiedenen Applikationen OF1, OF2.

Der Nachrichtenfluß erfolgt vorzugsweise unter Verwendung standardisierter M-EVENT-REPORT Nachrichten, die in eine zu Anfang initiierte M-ACTION-Request Anforderung und in eine zum Ende initiierte M-ACTION-Response Antwort eingebettet sind. Dieses sind generische CMISE-standardisierte (Common Management Information Service Element) Prozeduren, die gemäß ITU-T X.710 definiert sind. Die ITU-T X.733 definiert den Inhalt einer standardisierten Alarmübertragung (alarm report), die gemäß den M-EVENT-REPORT Services durchgeführt wird. Die Korrelationsinformationen werden in die Nachrichten bzw. in bestimmte Nachrichtenfelder eingetragen. Des weiteren versehen die Manager MA1, MA2 die Parameter zur Steuerung des Alarmdatenabgleichs mit bestimmten Parameterwerten und tragen sie einzeln oder mehrfach in die jeweilige Anforderungsnachricht ein. Das Beispiel in Figur 4 zeigt den Nachrichtenfluß nur anhand einzelner Nachrichten, wobei diese parallel zwischen dem Agent AG und den Managern MA1, MA2 oder seriell zwischen dem Agent AG und dem einzelnen Manager MA1 übertragen werden können.

Sobald nach einer Unterbrechung der Verbindung die Kommunikation zwischen dem Manager MA1, MA2 und dem Agent AG wiederhergestellt ist, sendet jeder Manager MA1, MA2 die M-ACTION-Request Anforderung mit einer Anforderungsnachricht repAA (report Active Alarms) zum Übermitteln der Alarmdaten. Vorzugsweise wird eine vom Manager MA1, MA2 definierte Korrelationsinformation alaAH (alarm Alignment Handle) - beispielsweise im definierten Nachrichtenfeld "actionInformation" - mitgesendet, die eine direkte Zuordnung der aktuellen M-ACTION-Request Anforderung zu allen nachfolgenden Agent-Nachrichten kennzeichnet. Damit ist bei mehreren Managern die aktuelle Anforderung auch dem jeweiligen Manager zuordenbar, sodaß die parallelen Realignments der Manager voneinander unabhängig initiiert, durchgeführt und beendet werden können.

Die Anforderungsnachricht repAA enthält auch die vom Manager eingetragenen Parameterwerte für den nachfolgenden Funktionsablauf. Damit wird eine einmalige individuelle Funktionsausführung (Action) zur parameterabhängigen Übermittlung von Alarmen vom Agent AG angefordert. Die Parametrisierung kann vorzugsweise mit einem oder mehreren eingestellten Parameterwerten relEN (related Entities), relPS (related perceived Severity), priSV (prio severity), relTI (related Time Interval), priDT (prio Detection Time) erfolgen. Durch den spezifischen Parameterwert werden vom Agent Alarme angefordert,
- die von ausgewählten Agenteinheiten stammen (relEN),
- für die eine Dringlichkeit angenommen wird (relPS),
- anhand dessen der Agent beim Senden eine Priorisierung der angeforderten Alarme nach deren Dringlichkeit, vorzugsweise anhand unterschiedlicher Dringlichkeitswerte (priSV), vornimmt,
- die innerhalb eines durch einen Anfangszeitpunkt und einen Endzeitpunkt definierten Zeitintervalls entstehen (relTI),
- anhand dessen der Agent beim Senden eine Priorisierung der Alarme nach dem Entstehungszeitpunkt der Alarme vornimmt (priDT).

Die Parameterwerte relEN... sind in einem gemäß dem Standard vorgegebenen Nachrichtenfeld der M-ACTION-Request Anforderung enthalten, um bereits vorhandene und definierte Felder mitbenutzen zu können. Eine günstige Variante unter Einbeziehung der Zeit besteht darin, daß von dem Agent die Alarmdaten der Alarme mit den ältesten Entstehungszeitpunkten zuerst und die Alarmdaten der Alarme mit den jüngsten Entstehungszeitpunkten zuletzt bereitgestellt und gesendet werden.Eine besonders geeignete Variante der Kombination der Parameterwerte bezüglich Zeit und Dringlichkeit besteht darin, daß von dem Agent die Alarmdaten der Alarme mit kritischer Dringlichkeit, bei der die Funktionalität als nicht mehr gegeben angenommen wird, zuerst und die Alarmdaten der Alarme mit unkritischer Dringlichkeit, bei der die Funktionalität als noch gegeben angenommen wird, zuletzt bereitgestellt und gesendet werden.

Im Anschluß an die Auswertung der Parameter in der eingetroffenen M-ACTION-Request Anforderung und der Bereitstellung nur der Alarmdaten, die zu den vom Manager in der parametrisierten Anforderung definierten Alarmen gehören, startet der Agent AG den Alarmdatenabgleich durch Erzeugen einer Nachricht staAA (start Alarm Alignment) und Einfügen einer weiteren Korrelationsinformation aliNI (alignment Notification Id) in diese Nachricht. Die vom Agent AG eingetragene Korrelationsinformation aliNI ermöglicht eine direkte Korrelation nachfolgender Alarme zu dem jeweils gestarteten Alarmdatenabgleich. Dabei ist die Korrelationsinformation alaAH ebenfalls in einem bestimmten Nachrichtenfeld enthalten. Die Korrelationsinformation aliNI ist beispielsweise in dem standardisierten Nachrichtenfeld "notification Identifier" der Nachricht staAA eingetragen. Beide Informationen alaAH, aliNI werden gemeinsam in der Nachricht staAA vom Agent AG zu den Managern MA1, MA2 ausgesendet. Dadurch können "alignmentbezogene" M-EVENT-REPORT Nachrichten verschiedener M-ACTION-Requests voneinander unterschieden werden, aber auch von regulären M-EVENT-REPORT Nachrichten, die mit dem Datenabgleich nichts zu tun haben. Eine Alignment-Prozedur stoppt nämlich nicht zwingend andere M-EVENT-REPORT Nachrichten, die während der Alignment-Prozedur spontan auftreten und an den oder die Manager gesendet werden.

Über die in der Anforderungsnachricht repAA des M-ACTION-Requests mitgesendete Korrelationsinformation alaAH lassen sich direkt die folgenden Nachrichten staAA sowie repAA korrelieren, da sie ebebnfalls die Korrelationsinformation alaAH enthalten. Die Nachrichten alNO sind über die Korrelationsinformation aliNI mit der Nachricht staAA direkt korreliert. Der Manager kann die Anforderungsnachricht repAA mit den nachfolgenden Nachrichten alNO indirekt über die beiden in der Nachricht staAA enthaltenen Korrelationsinformationen alaAH und aliNI korrelieren.

Im Anschluß an den Start des Alarmdatenabgleichs erfolgt die sukzessive Übertragung der Alarme mit den zugehörigen Alarmdaten in aufeinanderfolgenden Nachrichten alNO (alarm notification) unter Verwendung des M-EVENT-REPORT Service. Dabei weisen die einzelnen Nachrichten alNO jeweils die Korrelationsinformation aliNI - beispielsweise in dem definierten Nachrichtenfeld "correlated Notifications" - auf. Nach der letzten M-EVENT-REPORT Nachricht des Alarmdatenabgleichs generiert der Agent AG die M-ACTION-Response Antwort zur Nachricht repAA (report Active Alarms), die die Korrelationsinformation alaAH zur eindeutigen Kennung der jeweiligen Anforderung des Managers MA1, MA2 enthält. Durch Auswertung dieser Korrelationsinformation kann jeder Manager MA1, MA2, das Ende seiner initiierten M-ACTION-Request Anforderung auf einfache Art und Weise erkennen und die eintreffenden Alarmdaten den Anforderungen zuordnen. Für den Fall, daß zum Zeitpunkt der M-ACTION-Request Anforderung keine aktiven Alarme gespeichert sind, initiiert der Agent die M-ACTION-Response Antwort unmittelbar nach dem Senden der Nachricht staAA. Die Korrelationsinformationen alaAH, aliNI für die eindeutige Zuordnung mehrerer Anforderungen - möglicher simultaner Realignments zu mehreren Managern oder serieller Realignments zu einem einzelnen Manager - werden dennoch von den in der Agent-Manager-Beziehung involvierten Einrichtungen generiert und in den Nachrichten repAA, staAA gesendet. Auch wenn das zu Figur 4 beschriebene Beispiel sich auf parallel Realignments zu mehreren Managern bezieht, kann der Nachrichtenfluß selbstverständlich auf mehrere, von einem einzigen Manager nacheinander ausgelöste Anforderungen angewendet werden, mit dem Vorteil, daß durch die eindeutige Zuordnung anhand der Korrelationsinformationen für den einzelnen Manager die Möglichkeit besteht, die eintreffenden Antworten des Agenten mit den Alarmdaten auch bei Nichteinhalten der Reihenfolge eindeutig den Anforderungen zuordnen zu können - beispielsweise unterschiedlichen Anwendungen im Manager. Nacheinander gesendete Anforderungen können sich gegebenenfalls gegenseitig überholen, beispielsweise dann, wenn zwischen Agent und Manager ein Paketnetz durchlaufen wird.

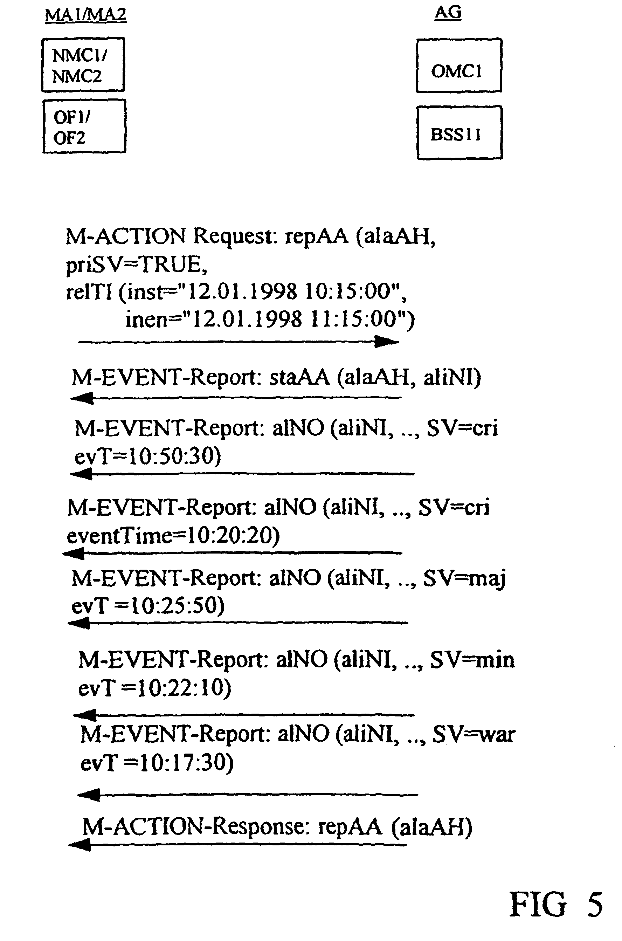

FIG 5 zeigt den Nachrichtenfluß gemäß FIG 4 bei Verwendung von zwei verschiedenen Parameterwerten, die im vorliegenden Beispiel von den Parameterwerten priSV und relTI gebildet sind. Der Parameterwert priSV nimmt den Wert TRUE an, was dem Agent signalisiert, daß er bei der Sendereihenfolge der Alarme nach unterschiedlichen Dringlichkeitswerten priorisieren soll. Für den Fall, daß der Parameterwert priSV einen anderen Wert (z.B. FALSE) annimmt, verzichtet der Agent auf die Priorisierung nach Dringlichkeitswerten. Wird das optional vorhandene Feld vom Manager zur Steuerung der angeforderten Alarme erst gar nicht benutzt, werden alle aktive Alarme, die eine angenommen Dringlichkeit aufweisen, übertragen (default-Modus). Der zweite Parameterwert relTI enthält eine Sequenz von zwei Werten inst (Interval Start) und inen (Interval End), die einen Anfangszeitpunkt und einen Endzeitpunkt zur Festlegung eines Zeitintervalls markieren. Dies bedeutet, daß nur die Alarme vom Agent angefordert werden, die innerhalb des durch inst, inen gekennzeichneten Zeitintervalls entstehen. Wird das optional vorhandene Feld vom Manager zur Steuerung der angeforderten Alarme erst gar nicht benutzt, werden alle aktive Alarme ohne Berücksichtigung des Entstehungszeitpunkts übertragen (default-Modus). Im vorliegenden Beispiel werden gezielt nur die Alarme - priorisiert nach deren Dringlichkeit (siehe obige Ausführungen) - , die zwischen "inst = 12.01.98 10:15:00" und "inen = 12.01.98 11:15:00" auftreten, vom Agent zur Verfügung gestellt und zum Manager gesendet.

Gemäß dem Beispiel in FIG 5 werden in den auf die Nachricht staAA folgenden Nachrichten alNO die Alarmdaten der ausgewählten Alarme unter Verwendung des M-EVENT-REPORT Service gesendet. Die einzelnen Nachrichten alNO weisen neben der Korrelationsinformation aliNI einen Wert für die Dringlichkeit SV (perceived Severity) des Alarms und einen Entstehungszeitpunkt evT (event Time) des Alarms auf. Die unterschiedlichen Dringlichkeitswerte reichen von "kritisch" cri (critical) über "wichtig" maj (major), "weniger wichtig" min (minor) bis zu "unkritisch" war (warning). Als kritisch wird ein Alarm aufgefasst, bei der die Funktionalität als nicht mehr gegeben angenommen wird, während bei einem unkritischen Alarm die Funktionalität als noch gegeben angenommen wird. Empfängt der Manager den Dringlichkeitswert war, fasst er diesen Alarm als Warnung bezüglich einer möglichen Beeinträchtigung der Funktionen des Agent auf.

Durch die eingestellten Parameter bezüglich der Dringlichkeit und des vom Agent zu überprüfenden Zeitintervalls weisen die beiden zuerst gesendeten Nachrichten alNO die Werte SV=cri für das Vorliegen kritischer Dringlichkeit mit zugehörigen Werten evT=10:50:30 und evT=10:20:20 für die Zeitpunkte ihres Auftretens. Die beiden nächstfolgenden Nachrichten alNO enthalten die Werte SV=maj, evT=10:25:50 zur Kennzeichnung eines Alarms mit einer wichtigen Dringlichkeit und die Werte SV=min, evT=10:22:10 zur Kennzeichnung eines Alarms mit einer weniger wichtigen Dringlichkeit. Die im Beispiel zuletzt gesendete Nachricht alNO umfasst die Werte SV=war, evT= 10:17:30, entsprechend der Anzeige einer Warnung an den Manager. Die Nachrichtensequenz ist für das individuelle Anfordern bestimmter Alarme durch Einstellung der Parameter in jeder Anforderungsnachricht repAA geeignet.

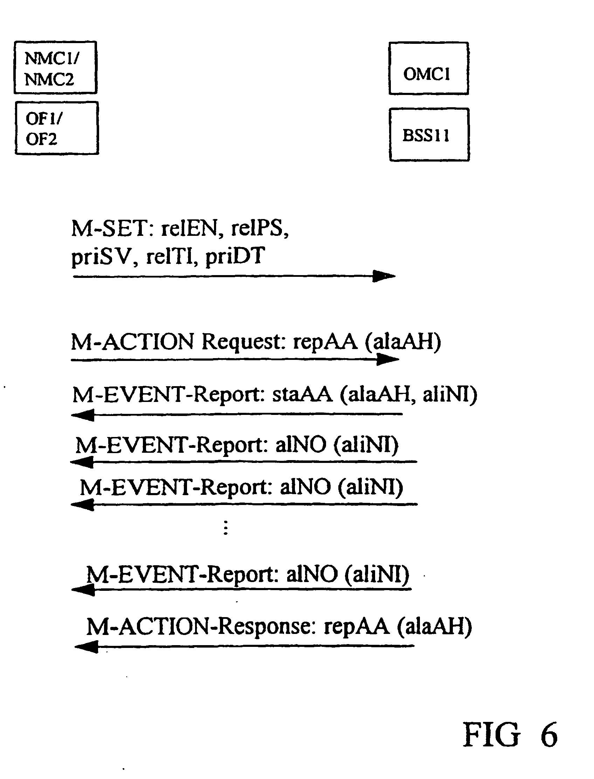

Im Gegensatz zu der Einstellung pro M-ACTION Request Anforderung zeigt FIG 6 den Nachrichtenfluß zwischen dem Manager und dem Agent zur parameterabhängigen Steuerung des Alarmdatenabgleichs durch eine einmalige Einstellung der Parameter, die für mehrere anschließende Anforderungsnachrichten repAA Gültigkeit hat. Damit wird in vorteilhafter Weise eine Parametrisierung für den Alarmdatenabgleich erzielt, ohne daß es jedes Mal einer Neueinstellung der Parameter bedarf. Zu diesem Zweck ist den Anforderungsnachrichten repAA gemäß M-ACTION Request, von denen beispielhaft nur eine dargestellt ist, eine Nachricht M-SET vorangestellt, mit der der oder die vom Manager eingefügten Parameter relEN, relPS, priSV, relTI, priDT im Agent als Auswahlkriterien für die zu übertragenden Alarme gesetzt werden.

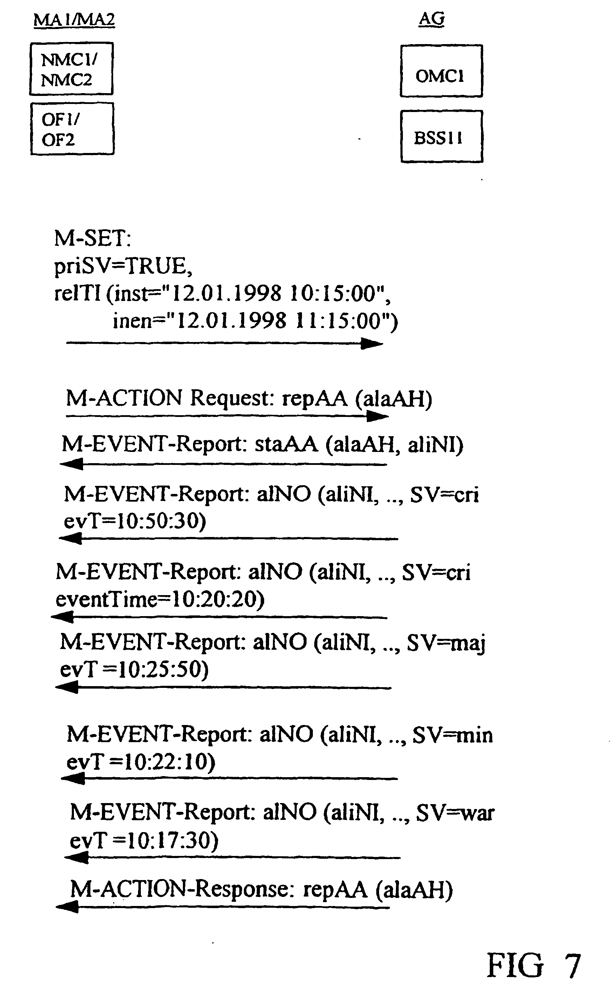

FIG 7 zeigt den zur Vorgehensweise von FIG 6 gehörigen Nachrichtenfluß bei Einstellung der zu FIG 5 bereits beschriebenen beiden Parameter priSV, relTI. Im Unterschied zu FIG 5 werden das durch den Anfangszeitpunkt inst und den Endezeitpunkt inen festgelegte Zeitintervall als Parameterwert relTI - nur in diesem Zeitfenster sollem vom Agent Alarme registriert und nach Dringlichkeit priorisiert werden - und die Dringlichkeit als Parameterwert priSV vom Manager in die Setznachricht M-SET eingefügt und vorab zum Agent gesendet. Die Einstellungen behalten für alle darauffolgenden Anforderungsnachrichten ihre Gültigkeit, bis eine neue Setznachricht M-SET die bisherigen Parameter überschreibt oder für ungültig erklärt. Die Nachrichten alNO enthalten dieselben Parameterwerte, die in FIG 5 beispielhaft angegeben und laut den zugehörigen Ausführungen beschrieben sind.

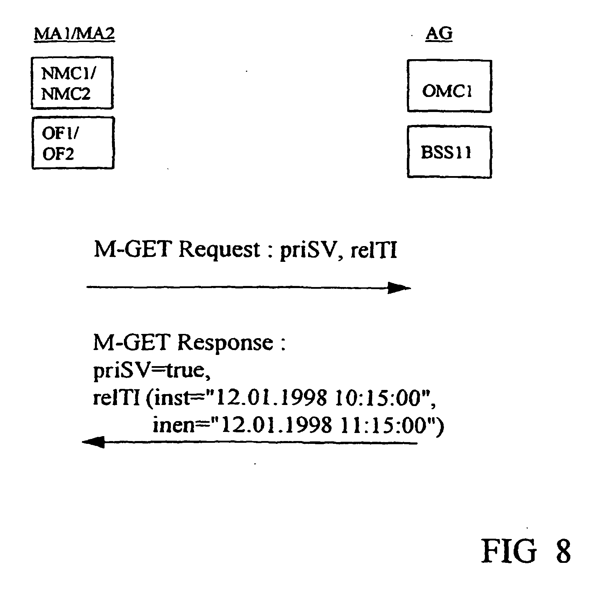

FIG 8 zeigt den Nachrichtenfluß zwischen dem Manager und dem Agent zur Abfrage der für den Alarmdatenabgleich benutzten und im Agent eingestellten Parameterwerte nach FIG 7, die mit der vorab gesendeten Setznachricht an den Agent übermittelt wurden. Zu diesem Zweck generiert der Manager eine M-GET Request Anforderung mit den abzufragenden Parameterwerten - im Beispiel den Parameterwerten priSV, relTI - und sendet sie zum Agent. Als Antwort erhält der anfragende Manager eine Nachricht M-GET Response mit den im Agent aktuell gültigen Einstellungen für die vorgegebenen Parameterwerte. Im vorliegenden Beispiel besteht die Rückmeldung des Agent in der Nachricht M-GET response aus den Werten priSV=TRUE und relTI (inst=12.01.98 10:15:00, inen=12.01.98 11:15:00). Auf diese Weise kann der Manager überprüfen, welche aktuelle Einstellung vorliegt, um ggf. Änderungen beim späteren Anfordern bestimmter Alarme durch aufeinanderfolgendes Erzeugen und Senden von Anforderungsnachrichten zu tätigen.

## Patentansprüche

1. Verfahren zur Behandlung von Alarmen in einem Kommunikationssystem durch ein mehrere Managementebenen (A, B, C) aufweisendes Managementnetz, wobei für einen Alarmdatenabgleich zwischen einem Agent (AG) einer Managementebene (B, C) und zumindest einem Manager (MA1, MA2) einer nächsthöheren Managementebene (A, B) die Alarmdaten aktiver Alarme übertragen werden, bei dem
- von dem Manager (MA1, MA2) jeweils eine oder mehrere Anforderungsnachrichten (repAA) zum Übermitteln der Alarmdaten an den Agent (AG) gesendet werden,
- von dem Manager (MA1, MA2) Korrelationsinformationen (alaAH, aliNI) für eine Zuordnung der jeweiligen Anforderung zu den vom Agent (AG) nachfolgend gesendeten Nachrichten (alNO) mit den Alarmdaten empfangen werden, und
- von dem Manager (MA1, MA2) der Alarmdatenabgleich abhängig von zumindest einem zum Agent (AG) gesendeten Parameter (par) gesteuert wird.

2. Verfahren nach Anspruch 1, bei dem
von dem Manager (MA1, MA2) der oder die Parameter (par) in jeder Anforderungsnachricht (repAA) zu dem Agent (AG) gesendet werden.

3. Verfahren nach Anspruch 1, bei dem
von dem Manager (MA1, MA2) der oder die Parameter (par) in einer den Anforderungsnachrichten (repAA) vorangestellten Setznachricht (M-SET) zu dem Agent (AG) gesendet werden.

4. Verfahren nach einem der vorhergehenden Ansprüche, bei dem ein Parameter (par) von dem Manager (MA1, MA2) mit einem Parameterwert (relEN) versehen wird, durch den vom Agent (AG) Alarme angefordert werden, die von ausgewählten Agenteinheiten stammen.

5. Verfahren nach einem der vorhergehenden Ansprüche, bei dem ein Parameter (par) von dem Manager (MA1, MA2) mit einem Parameterwert (relPS) versehen wird, durch den vom Agent (AG) Alarme angefordert werden, für die eine Dringlichkeit angenommen wird.

6. Verfahren nach Anspruch 5, bei dem
von dem Manager (MA1, MA2) ein zusätzlicher Parameterwert (priPS) benutzt wird, anhand dessen der Agent (AG) beim Senden eine Priorisierung der angeforderten Alarme nach deren Dringlichkeit vornimmt.

7. Verfahren nach Anspruch 6, bei dem
der Agent (AG) die Priorisierung der zu dem Manager (MA1, MA2) zu übertragenden Alarme nach unterschiedlichen Dringlichkeitswerten (cri, maj, min, war) vornimmt.

8. Verfahren nach einem der vorhergehenden Ansprüche, bei dem ein Parameter (par) von dem Manager (MA1, MA2) mit einem Parameterwert (relTI) versehen wird, durch den vom Agent (AG) Alarme angefordert werden, die innerhalb eines durch einen Anfangszeitpunkt (inst) und einen Endzeitpunkt (inen) definierten Zeitintervalls entstehen.

9. Verfahren nach einem der vorhergehenden Ansprüche, bei dem von dem Manager (MA1, MA2) ein zusätzlicher Parameterwert (priDT) benutzt wird, anhand dessen der Agent (AG) beim Senden eine Priorisierung der Alarme nach dem Entstehungszeitpunkt (evT) der Alarme vornimmt.

10. Verfahren nach Anspruch 9, bei dem
von dem Agent (AG) die Alarmdaten der Alarme mit den ältesten Entstehungszeitpunkten (evT) zuerst und die Alarmdaten der Alarme mit den jüngsten Entstehungszeitpunkten (evT) zuletzt bereitgestellt und gesendet werden.

11. Verfahren nach Anspruch 9 oder 10, bei dem
von dem Agent (AG) die Alarmdaten der Alarme mit kritischer Dringlichkeit, bei der die Funktionalität als nicht mehr gegeben angenommen wird, zuerst und die Alarmdaten der Alarme mit unkritischer Dringlichkeit, bei der die Funktionalität als noch gegeben angenommen wird, zuletzt bereitgestellt und gesendet werden.

12. Kommunikationssystem zur Behandlung von Alarmen durch ein mehrere Managementebenen (A, B, C) aufweisendes Managementnetz, wobei für einen Alarmdatenabgleich zwischen einem Agent (AG) einer Managementebene (z.B. B) und zumindest einem Manager (MA1, MA2) einer nächsthöheren Managementebene (z.B. A) die Alarmdaten aktiver Alarme übertragen werden,
- Einrichtungen (M-CTR) in dem Manager (MA1, MA2) für das Senden einer oder mehrerer Anforderungsnachrichten (repAA) zum Übermitteln der Alarmdaten an den Agent (OMC1), und
- Einrichtungen (M-CTR) in dem Manager (MA1, MA2) für das Empfangen von Korrelationsinformationen (alaAH, aliNI) für eine Zuordnung der jeweiligen Anforderung zu den vom Agent (AG) nachfolgend gesendeten Nachrichten (alNO) mit den Alarmdaten, und
- Einrichtungen (M-CTR) in dem Manager (MA1, MA2) für eine Steuerung des Alarmdatenabgleich abhängig von zumindest einem zum Agent (AG) gesendeten Parameter (par).

13. Kommunikationssystem nach Anspruch 12, bei dem
die Einrichtungen (M-CTR) in dem Manager (MA1, MA2) den oder die Parameter (par) in jede Anforderungsnachricht (repAA) einfügen.

14. Kommunikationssystem nach Anspruch 12, bei dem
die Einrichtungen (M-CTR) in dem Manager (MA1, MA2) den oder die Parameter (par) in eine den Anforderungsnachrichten (repAA) vorangestellte, zu dem Agent (AG) gesendete Setznachricht (M-SET) einfügen.

15. Kommunikationssystem nach einem der Ansprüche 12 bis 14, bei dem von dem Manager (MA1, MA2) ein Parameter (par) mit einem Parameterwert (relEN) versehen ist, durch den vom Agent (AG) Alarme angefordert werden, die von ausgewählten Agenteinheiten stammen.

16. Kommunikationssystem nach einem der Ansprüche 12 bis 15, bei dem ein Parameter (par) von dem Manager (MA1, MA2) mit einem Parameterwert (relPS) versehen ist, durch den vom Agent (AG) Alarme angefordert werden, für die eine Dringlichkeit angenommen wird.

17. Kommunikationssystem nach Anspruch 16, bei dem
von dem Manager (MA1, MA2) ein zusätzlicher Parameterwert (priPS) benutzt ist, anhand dessen der Agent (AG) beim Senden eine Priorisierung der angeforderten Alarme nach deren Dringlichkeit vornimmt.

18. Kommunikationssystem nach einem der Ansprüche 12 bis 17, bei dem ein Parameter (par) von dem Manager (MA1, MA2) mit einem Parameterwert (relTI) versehen ist, durch den vom Agent (AG) Alarme angefordert werden, die innerhalb eines durch einen Anfangszeitpunkt (inst) und einen Endzeitpunkt (inen) definierten Zeitintervalls entstehen.

19. Kommunikationssystem nach Anspruch 18, bei dem
von dem Manager (MA1, MA2) ein zusätzlicher Parameterwert (priDT) benutzt ist, anhand dessen der Agent (AG) eine Priorisierung beim Senden der Alarme nach dem Entstehungszeitpunkt (evT) der Alarme vornimmt.

## Claims

1. Method for the handling of alarms in a communication system by a management network having a plurality of management levels (A, B, C), the alarm data of active alarms being transmitted between an agent (AG) of one management level (B, C) and at least one manager (MA1, MA2) of the next higher management level (A, B) for alarm realignment, wherein
- one or more request messages (repAA) to transmit alarm data are sent to the agent (AG) by the manager (MA1, MA2),
- correlation information (alaAH, aliNI) for associating the relevant request with the alarm notification messages (alNO) subsequently sent by the agent (AG) is received by the manager (MA1, MA2) with the alarm data, and
- alarm realignment is controlled by the manager (MA1, MA2) as a function of at least one parameter (par) sent to the agent (AG).

2. Method according to Claim 1, wherein the parameter or parameters (par) are sent to the agent (AG) by the manager (MA1, MA2) in each request message (repAA).

3. Method according to Claim 1, wherein the parameter or parameters (par) are sent to the agent (AG) by the manager (MA1, MA2) in a set message (M-SET) preceding the request messages (repAA).

4. Method according to one of the preceding Claims, wherein a parameter (par) is provided with a parameter value (relEN) by the manager (MA1, MA2), by means of which alarms originating from selected agent entities are requested from the agent (AG).

5. Method according to one of the preceding Claims, wherein a parameter (par) is provided with a parameter value (relPS) by the manager (MA1, MA2), by means of which alarms having a perceived severity are requested from the agent (AG).

6. Method according to Claim 5, wherein an additional parameter value (priPS) is used by the manager (MA1, MA2), on the basis of which the agent (AG) prioritises the requested alarms for transmission according to their severity.

7. Method according to Claim 6, wherein the agent (AG) prioritises the alarms to be transmitted to the manager (MA1, MA2) according to different severity values (cri, maj, min, war).

8. Method according to one of the preceding Claims, wherein a parameter (par) is provided with a parameter value (relTI) by the manager (MA1, MA2), by means of which alarms occurring within a time interval defined by a start time (inst) and an end time (inen) are requested from the agent (AG).

9. Method according to one of the preceding Claims, wherein an additional parameter value (priDT) is used by the manager (MA1, MA2), on the basis of which the agent (AG) prioritises the alarms for transmission according to the event time (evT).

10. Method according to Claim 9, wherein the alarm data of the alarms having the oldest event time (evT) is prepared and transmitted first and the alarm data of the alarms having the most recent event time (evT) is prepared and transmitted last by the agent (AG).

11. Method according to Claim 9 or 10, wherein the alarm data of the alarms with critical severity, in the case of which functionality can no longer be assumed, is prepared and transmitted first and the alarm data of the alarms with noncritical severity, in the case of which functionality is still assumed to be in place, is prepared and transmitted last by the agent (AG).

12. Communication system for the handling of alarms by a management network having a plurality of management levels (A, B, C), the alarm data of active alarms being transmitted between an agent (AG) of one management level (e.g. B) and at least one manager (MA1, MA2) of the next higher management level (e.g. A) for alarm realignment,
- devices (M-CTR) in the manager (MA1, MA2) for transmitting to the agent (OMC1) one or more request messages (repAA) to forward the alarm data, and
- devices (M-CTR) in the manager (MA1, MA2) for receiving from the agent (AG) correlation information (alaAH, aliNI) for associating the particular request with the alarm notification messages (alNO) subsequently sent by the agent (AG), and
- devices (M-CTR) in the manager (MA1, MA2) for controlling the alarm realignment as a function of at least one parameter (par) transmitted to the agent (AG).

13. Communication system according to Claim 12, wherein the devices (M-CTR) in the manager (MA1, MA2) insert the parameter or parameters (par) in each request message (repAA).

14. Communication system according to Claim 12, wherein the devices (M-CTR) in the manager (MA1, MA2) insert the parameter or parameters (par) in a set message (M-SET) sent to the agent (AG) prior to the request messages (repAA).

15. Communication system according to one of Claims 12 to 14, wherein a parameter (par) is provided with a parameter value (relEN) by the manager (MA1, MA2), whereby alarms originating from selected agent entities are requested from the agent (AG).

16. Communication system according to one of Claims 12 to 15, wherein a parameter (par) is provided with a parameter value (relPS) by the manager (MA1, MA2), whereby alarms having a perceived severity are requested from the agent (AG).

17. Communication system according to Claim 16, wherein an additional parameter value (priPS) is used by the manager (MA1, MA2), on the basis of which the agent (AG) prioritises the alarms according to their severity for transmission.

18. Communication system according to one of Claims 12 to 17, wherein a parameter (par) is provided with a parameter value (relTI) by the manager (MA1, MA2), whereby alarms occurring within a time interval defined by a start time (inst) and an end time (inen) are requested from the agent (AG).

19. Communication system according to Claim 18, wherein an additional parameter value (priDT) is used by the manager (MA1, MA2), on the basis of which the agent (AG) prioritises the alarms according to their event time (evT) for transmission.

## Revendications

1. Procédé pour le traitement d'alarmes dans un système de communication par un réseau de gestion comportant plusieurs niveaux de gestion (A, B, C), les données d'alarme d'alarmes actives étant transmises pour un réalignement des données d'alarme entre un agent (AG) d'un niveau de gestion (B, C) et au moins un gestionnaire (MA1, MA2) d'un niveau de gestion (A, B) directement supérieur, dans lequel
- respectivement un ou plusieurs messages de requête (repAA) sont envoyés par le gestionnaire (MA1, MA2) pour la transmission des données d'alarme à l'agent (AG),
- des informations de corrélation (alaAH, aliNI) sont reçues par le gestionnaire (MA1, MA2) pour une affectation de la requête respective aux messages (alNO) et les données d'alarme, lesquels sont envoyés ensuite par l'agent (AG),
- le réalignement des données d'alarme est contrôlé par le gestionnaire (MA1, MA2) en fonction d'au moins un paramètre (par) envoyé à l'agent (AG).

2. Procédé selon la revendication 1, dans lequel
le ou les paramètre(s) (par) sont envoyés par le gestionnaire (MA1, MA2) à l'agent (AG) dans chaque message de requête (repAA).

3. Procédé selon la revendication 1, dans lequel
le ou les paramètre(s) (par) sont envoyés par le gestionnaire (MA1, MA2) à l'agent (AG) dans un message de réglage (M-SET) posé en amont des messages de requête (repAA).

4. Procédé selon l'une des revendications précédentes, dans lequel un paramètre (par) est pourvu, par le gestionnaire (MA1, MA2), d'une valeur paramétrique (relEN) par laquelle l'agent (AG) demande des alarmes qui proviennent d'unités d'agent sélectionnées.

5. Procédé selon l'une des revendications précédentes, dans lequel un paramètre (par) est pourvu, par le gestionnaire (MA1, MA2), d'une valeur paramétrique (relPS) par laquelle l'agent (AG) demande des alarmes pour lesquelles une urgence est supposée.

6. Procédé selon la revendication 5, dans lequel
est utilisée, par le gestionnaire (MA1, MA2), une valeur paramétrique (priPS) supplémentaire à l'aide de laquelle l'agent (AG), lors de l'émission, opère, selon leur urgence, une priorisation des alarmes demandées.

7. Procédé selon la revendication 6, dans lequel
l'agent (AG) opère, selon différentes valeurs d'urgence (cri, maj, min, war), la priorisation des alarmes à transmettre au gestionnaire (MA1, MA2).

8. Procédé selon l'une des revendications précédentes, dans lequel un paramètre (par) est pourvu, par le gestionnaire (MA1, MA2), d'une valeur paramétrique (relTI) par laquelle l'agent (AG) demande des alarmes qui se forment à l'intérieur d'un intervalle de temps défini par un instant initial (inst) et un instant final (inen).

9. Procédé selon l'une des revendications précédentes, dans lequel est utilisée, par le gestionnaire (MA1, MA2), une valeur paramétrique supplémentaire (priDT) à l'aide de laquelle l'agent (AG) opère, lors de l'émission, une priorisation des alarmes selon l'instant de la formation (evT) des alarmes.

10. Procédé selon la revendication 9, dans lequel
sont mises à disposition et envoyées par l'agent (AG), en premier lieu, les données d'alarme des alarmes avec les instants de formation (evT) les plus anciens et, en dernier lieu, les données d'alarme des alarmes avec les instants de formation (evT) les plus récents.

11. Procédé selon la revendication 9 ou 10, dans lequel
sont mises à disposition et envoyées par l'agent (AG), en premier lieu, les données d'alarme des alarmes avec une d'urgence critique pour laquelle la fonctionnalité est supposée n'être plus donnée et, en dernier lieu, les données d'alarme des alarmes avec une urgence non critique pour laquelle la fonctionnalité est supposée être encore donnée.

12. Système de communication pour le traitement d'alarmes par un réseau de gestion comportant plusieurs niveaux de gestion (A, B, C), les données d'alarme d'alarmes actives étant transmises pour un réalignement des données d'alarme entre un agent (AG) d'un niveau de gestion p.ex. B et au moins un gestionnaire (MA1, MA2) d'un niveau de gestion, p.ex.A directement supérieur,
- des équipements (M-CTR) dans le gestionnaire (MA1, MA2) pour l'émission d'un ou de plusieurs messages de requête (repAA) pour la transmission des données d'alarme à l'agent (OMC1) et
- des équipements (M-CTR) dans le gestionnaire (MA1, MA2) pour la réception d'informations de corrélation (alaAH, aliNI) pour une affectation de la requête respective aux messages (alNO) avec les données d'alarme, lesquels sont envoyés ensuite par l'agent (AG) et
- des équipements (M-CTR) dans le gestionnaire (MA1, MA2) pour un contrôle du réalignement des données d'alarme en fonction d'au moins un paramètre (par) envoyé à l'agent (AG).

13. Système de communication selon la revendication 12, dans lequel les équipements (M-CTR) dans le gestionnaire (MA1, MA2) insèrent le ou les paramètre(s) (par) dans chaque message de requête (repAA).

14. Système de communication selon la revendication 12, dans lequel les équipements (M-CTR) dans le gestionnaire (MA1, MA2) insèrent le ou les paramètre(s) (par) dans un message de réglage (M-SET) posé en amont des messages de requête (repAA) et envoyé à l'agent (AG).

15. Système de communication selon l'une des revendications 12 à 14, dans lequel un paramètre (par) est pourvu, par le gestionnaire (MA1, MA2), d'une valeur paramétrique (relEN) par laquelle l'agent (AG) demande des alarmes qui proviennent d'unités d'agent sélectionnées.

16. Système de communication selon l'une des revendications 12 à 15, dans lequel un paramètre (par) est pourvu, par le gestionnaire (MA1, MA2), d'une valeur paramétrique (relPS) par laquelle l'agent (AG) demande des alarmes pour lesquelles une urgence est supposée.

17. Système de communication selon la revendication 16, dans lequel est utilisée, par le gestionnaire (MA1, MA2), une valeur paramétrique (priPS) supplémentaire à l'aide de laquelle l'agent (AG) opère, selon leur urgence et lors de l'émission, une priorisation des alarmes demandées.

18. Système de communication selon l'une des revendications 12 à 17, dans lequel un paramètre (par) est pourvu, par le gestionnaire (MA1, MA2), d'une valeur paramétrique (relTI) par laquelle l'agent (AG) demande des alarmes qui se forment à l'intérieur d'un intervalle de temps défini par un instant initial (inst) et un instant final (inen).

19. Système de communication selon la revendication 18, dans lequel est utilisée, par le gestionnaire (MA1, MA2), une valeur paramétrique (priDT) supplémentaire à l'aide de laquelle l'agent (AG) opère une priorisation lors de l'émission des alarmes demandées selon l'instant de la formation (evT) des alarmes.
